# EUROPÄISCHE PATENTSCHRIFT

(11) **EP 1 279 526 B1**
(45) Veröffentlichungstag und Bekanntmachung des Hinweises auf die Patenterteilung: **08.10.2008**
(21) Anmeldenummer: 02011634.9
(22) Anmeldetag: 29.05.2002
(51) Int. Cl.: B60C 23/04, B60C 23/20

(54) **Verfahren und System zum Überwachen des Betriebs eines Fahrzeugreifens sowie Fahrzeugreifen**
Method and system for monitoring the functionning of a vehicle tyre, vehicle tyre
Méthode et système pour surveiller le fonctionnement d'un pneumatique pour véhicule, pneumatique pour véhicule

(30) Priorität: 24.07.2001 DE 10135883; 19.11.2001 DE 10156776
(43) Veröffentlichungstag der Anmeldung: 29.01.2003
(73) Patentinhaber: TÜV Automotive GmbH Unternehmensgruppe TÜV Süddeutschland, 80339 München (DE)
(72) Erfinder: Aubel, Thomas, 83607 Holzkirchen (DE); Berkmüller, Markus, 82061 Neuried (DE); Möbius, Reinhard, 81337 München (DE); Schick, Bernhard, 76199 Karlsruhe (DE); Ziegler, Thomas, 85716 Unterschleissheim (DE)
(74) Vertreter: Kramer - Barske - Schmidtchen

(56) Entgegenhaltungen:
- DE-A- 3 247 371
- DE-A- 19 924 830
- DE-C- 877 263
- US-A- 5 348 067

## Beschreibung

Die Erfindung betrifft ein System zum Überwachen des Betriebs eines Fahrzeugreifens. Die Erfindung betrifft weiter einen Fahrzeugreifen.

Reifen von Fahrzeugen unterliegen im Betrieb erheblichen Belastungen. Neben den Umwelteinflüssen durch Gase, Licht und Flüssigkeiten sowie mechanische Beanspruchungen ist für die Lebensdauer eines Reifens der Reifenfülldruck, das heißt, der innerhalb des Reifens herrschende Luftdruck, von maßgeblicher Bedeutung. Insbesondere zu geringer Luftdruck führt zu übermäßiger Walkarbeit des Reifens, wodurch sich die Reifentemperatur insbesondere im Bereich der Reifenschulter, das heißt, im Übergang zwischen der Lauffläche und der Seitenwand erhöht. Eine hohe Temperatur schädigt nicht nur den Reifengummi selbst, sondern auch dessen Verbindung mit der Karkasse und weiteren Reifeneinlagen, beispielsweise einem Gürtel. Eine Kenntnis der Temperatur des Reifens insbesondere im Schulterbereich ermöglicht daher Aussagen über den Zustand des Reifens bzw. eine mögliche Schädigung.

In der DE 199 24 830 A, von der in den Oberbegriffen der unabhängigen Ansprüche ausgegangen wird, ist eine Vorrichtung zur Messung von Druck und Temperatur in Kraftfahrzeugreifen und zur Verschleißüberwachung beschrieben. Zur Druck- und Temperaturmessung ist in die Seitenwand des Reifens ein Transponder mit Aufnehmern für Druck und Temperatur eingebettet. Zur Verschleißüberwachung ist in das Laufflächenprofil des Reifens eine Drahtschleife eingebettet, deren Unterbrechung vom Transponder erfasst wird. Der Transponder kommuniziert berührungslos mit einer fahrzeugfesten Auswerteeinrichtung. Der Reifendruck und die Reifentemperatur sowie eine Unterbrechung der Drahtschleife werden jeweils augenblicklich erfasst und überwacht, so dass bei gefährlichen Betriebszuständen gewarnt werden kann.

Aus der GB-A-2088607 ist ein Reifenausfallwarnsystem bekannt, bei dem ein auf die Reifentemperatur ansprechendes Element in den Bereich der Reifenschulter eingebettet ist, wobei die Temperaturempfindlichkeit des Elements darin besteht, dass es sich bei Überschreiten einer vorbestimmten Temperatur vom Reifen löst. Dieses Ablösen wird von Detektoren festgestellt und angezeigt.

Wie eingangs erläutert, schädigt eine hohe Temperatur nicht nur den Reifengummi selbst, sondern auch dessen Verbindung mit der Karkasse und weiteren Reifeneinlagen, beispielsweise einem Reifengürtel. Eine Schädigung dieser Verbindung ist nicht unmittelbar von außen sichtbar. Sie kann jedoch zu gefährlichen Festigkeitsverlusten des Reifens führten, die beispielsweise bei einer Fahrt mit hoher Geschwindigkeit zur Ablösung der Laufflächen oder sonstigen gefährlichen Reifenschäden führen.

Der Erfindung liegt die Aufgabe zugrunde, eine Möglichkeit zu schaffen, nicht nur einen augenblicklichen unzureichenden Luftdruck eines Fahrzeugreifens anzuzeigen bzw. zu überwachen, sondern auch die Betriebszuverlässigkeit des Reifens zu überwachen und zu prognostizieren.

Diese Aufgabe wird mit einem Verfahren gemäß dem Anspruch 1 gelöst.

Erfindungsgemäß wird der Temperatursensor in den Schulterbereich des Reifens eingebettet und wird das Ausgangssignal dieses Temperatursensors hinsichtlich seiner Höhe und seines zeitlichen Verlaufs ausgewertet. Aus der augenblicklichen Temperatur im Bereich der Reifenschulter kann auf zu niedrigen oder zu hohen Reifenfülldruck oder sonstige Fehler geschlossen werden. Der zeitliche Verlauf der Höhe der Reifentemperatur erlaubt Aussagen über die Schädigung des Reifenmaterials, die um so höher ist, je höher die Temperatur ist und je länger die hohe Temperatur andauert. Somit erlaubt das erfindungsgemäße Verfahren eine Überwachung der Betriebszuverlässigkeit des Reifens und zusätzlich eine Prognose über seine zuverlässige Restlaufdauer.

Die Unteransprüche 2 und 3 bilden das erfindungsgemäße Verfahren in vorteilhafter Weise weiter.

Der Anspruch 4 ist auf ein Fahrzeugreifenüberwachungssystem gerichtet, das entsprechend dem erfindungsgemäßen Verfahren arbeitet.

Der Anspruch 5 kennzeichnet einen Fahrzeugreifen, der zur Durchführung des erfindungsgemäßen Verfahrens verwendbar ist, wobei im Reifen selbst ein seiner Schädigung entsprechender Schädigungswert gespeichert ist, der jeder Zeit ausgelesen werden kann.

Die Unteransprüche 6 bis 8 sind auf vorteilhafte Ausführungen des erfindungsgemäßen Fahrzeugreifens gerichtet.

Die Erfindung wird im Folgenden anhand schematischer Zeichnungen beispielsweise und mit weiteren Einzelheiten erläutert.

Es stellen dar:
- Fig. 1: einen Querschnitt durch die obere Hälfte eines Fahrzeugreifens,
- Fig. 2: ein Blockschaltbild von an einen Transponder angeschlossenen Temperatursensoren,
- Fig. 3: eine Ansicht ähnlich der Fig. 1 einer abgeänderten Ausführungsform,
- Fig. 4: eine Temperaturkurve zur Erläuterung der Reifenüberwachung,
- Fig. 5: einen Viertelquerschnitt durch eine weitere Ausführungsform eines Reifens mit einem Blockschaltbild und
- Fig. 6: Skizzen zur Erläuterung eines Verfahrens zum nachträglichen Anbringen eines Temperatursensors an einem Reifen. Dieses Verfahren ist nicht gegenstand dieser Erfindung und dient nur zur allgemeinen Information.

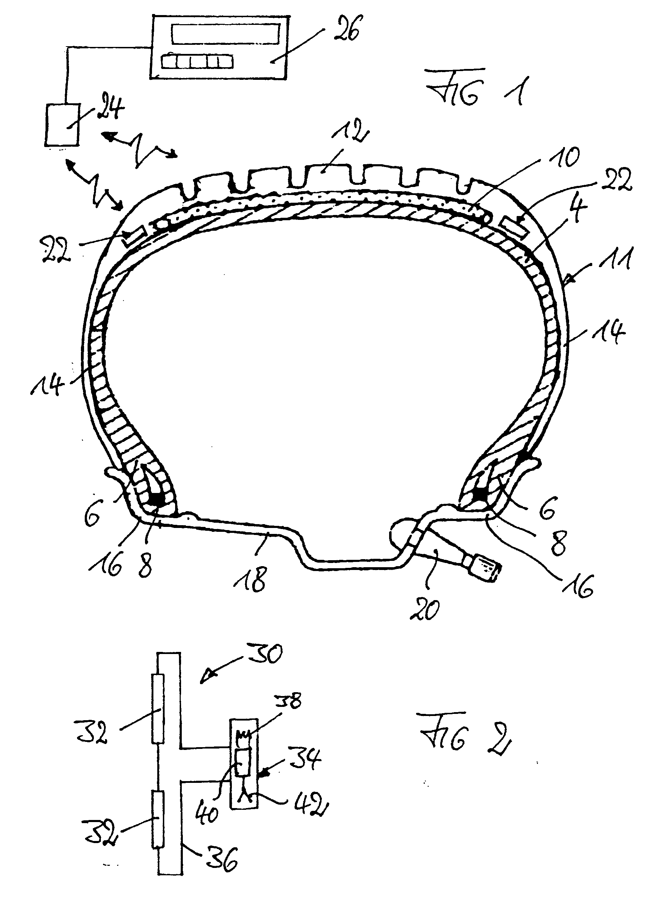

Fig. 1 zeigt einen Querschnitt durch einen Reifen in Radialbauweise, der eine Karkasse 4 aufweist, die beispielsweise aus zwei radial verlaufenden Lagen aus Rayon-Fäden zusammengesetzt ist und radial einwärts in Wülsten 6 endet. Zur Stabilisierung der Wülste 6 sind in deren radial innere Endbereiche Kerne 8 eingelagert. Auf dem radial äußeren Bereich der Karkasse 4 ist ein Gürtel 10 angeordnet, der beispielsweise aus zwei gekreuzten Lagen von Stahlfäden und zwei umlaufenden Lagen von Nylon-Fäden besteht. Über die Karkasse 4 beziehungsweise den Gürtel 10 ist eine Gummischicht 11 vulkanisiert, die im radial äußeren Bereich den Laufstreifen 12 bildet und im seitlichen Bereich verhältnismäßig dünne Seitenstreifen 14 bildet.

Die Wülste 6 sind in Schultern 16 einer Felge 18 aufgenommen, die wiederum mit einer nicht dargestellten Radschüssel verbunden ist. Bei dem Reifen handelt es sich um eine luftdichte Konstruktion, so dass das Reifeninnere über ein in die Felge eingesetztes Ventil 20 mit Druckluft beaufschlagt werden kann.

Die beschriebene Reifenkonstruktion ist an sich bekannt und wird daher nicht weiter erläutert. Die Konstruktion ist nur beispielsweise. Die Erfindung kann auch für Reifen abgeänderter Bauart verwendet werden.

Die Beanspruchung des Reifens ist im Übergangsbereich von den relativ biegsamen Seitenwänden in den steifen Laufflächenbereich besonders hoch, da dort, insbesondere, wenn mit zu geringem Luftdruck oder sonstwie zu hoher mechanischer Verformung des Reifens, beispielsweise Schräglauf, gefahren wird, bei dem Abrollen des Reifens auf der Fahrbahn Verformungen auftreten, aufgrund derer das Reifenmaterial erwärmt wird. Diese Erwärmungen können das Gummimaterial selbst schädigen und zu Ablösungen zwischen dem Gummi und dem Gürtel beziehungsweise der Karkasse führen.

Erfindungsgemäß ist daher in die Gummischicht 11 im Bereich der Reifenschulter wenigstens eine Temperatursensoreinheit 22 eingebettet.

Im dargestellten Beispiel ist die Temperatursensoreinheit 22 durch einen Transponder mit integriertem Temperatursensorelement gebildet. Das Temperatursensorelement kann beispielsweise ein temperaturabhängiger Widerstand, ein temperaturabhängiger Kondensator, eine temperaturabhängige Induktivität, usw., sein, die die Frequenz eines von dem Transponder abgestrahlten Signals oder eine andere Größe eines von dem Transponder abgestrahlten Signals verändert. Das Sensorelement kann unmittelbar in das Substrat bzw. den Grundkörper des Transponders integriert sein.

Eine fahrzeugfeste Sende-/Empfangseinrichtung 24, die an eine Auswerteeinrichtung 26 angeschlossen ist, dient zur bidirektionalen Datenkommunikation mit dem Temperatursensorelement 22 beziehungsweise Transponder und zu dessen Energieversorgung. Aufbau und Funktion solcher Transponder sind an sich bekannt und werden daher nicht erläutert.

### Die Funktion der Anordnung gemäß Fig. 1 is folgende:

Über eine geeignete, von der Sende-/Empfangseinrichtung abgestrahlte Frequenz werden die Transponder 22 (auf jeder Seite des Reifens ist im Schulterbereich ein Transponder eingebettet) mit Energie versorgt und aktiviert. Die Transponder senden Signale mit Information über die in ihnen herrschende Temperatur. Diese Signale werden von der Sende-/Empfangseinrichtung 24 aufgenommen und an die Auswerteeinrichtung 26 übertragen. Die Auswerteeinrichtung 26 enthält einen Mikroprozessor mit zugehörigen Speichereinrichtungen und in an sich bekannter Weise ein Bedienfeld, eine Anzeigeeinheit, usw.. Die Auswerteeinrichtung wertet die von den Transpondern gesendeten Temperatursignale getrennt für jeden Transponder aus. Bei Überschreiten einer kritischen Temperatur erfolgt ein Warnsignal. Weiter können die im Betrieb auftretenden Temperaturdaten gespeichert werden, so dass die Zeitdauern ausgewertet werden können, während derer der Reifen auf bestimmten Temperaturen war. Die Schädigung des Reifens ist um so größer, je länger und höher eine Temperatur vorherrschte. Auf diese Weise können Schädigungen ermittelt werden und es ist eine sichere Aussage über die Intaktheit, eine Vorschädigung oder eine Schädigung bis zu einem gefährlichen Zustand des Reifens möglich. Die mit dem erfindungsgemäßen System gewonnenen Aussagen sind erheblich aussagekräftiger als Aussagen, die mittels herkömmlicher Luftdruckkontrollvorrichtungen möglich sind.

Das Einbetten der Temperatursensorelemente beziehungsweise Transponder 22 in die Gummischicht 11 geschieht in der Form, in der der Reifen hergestellt wird. Je nach Zweck und Aufwand kann ein Reifen nur mit einem Transponder oder mehreren Transpondern versehen werden, die in einer oder beiden Reifenschultern eingebettet werden können.

Die Datenkommunikation zwischen Transponder und Sende-/Empfangseinheit kann auch unidirektional sein, wobei der Transponder ständig oder in vorbestimmten Zeitabständen sendet und von der Sende-/Empfangseinheit lediglich mit Energie versorgt wird.

Fig. 2 zeigt eine abgeänderte Ausführungsform einer Temperatursensoreinheit 30. Bei der Ausführungsform gemäß Fig. 2 sind die eigentlichen Temperatursensorelemente 32 von dem Transponder 34 entfernt im Reifen angeordnet. Die Temperatursensorelemente 32 können beispielsweise Leiterbahnelemente mit temperaturabhängigem Widerstand sein, die in die Gummischicht im Bereich der Reifenschulter in Umfangsrichtung voneinander entfernt eingebettet sind und über ebenfalls in die Gummischicht eingebettete Drähte 36 miteinander verbunden sind. Die Drähte 36 sind beispielsweise zusätzlich in die Seitenstreifen 14 der Gummischicht integriert, beispielsweise mit der Karkasse 4 vernäht, und verbinden die Temperatursensorelemente 32 mit dem Transponder 34, der in den radial inneren Bereich des Reifenwulstes beispielsweise nach dem Heißvulkanisieren des Reifens eingesetzt und eingebettet wird, so dass er nicht den hohen Temperaturen ausgesetzt wird, die während der Herstellung des Reifens herrschen. In Fig. 2 sichtbar ist eine Empfangsantenne 38 des Transponders 34, die zu dessen Energieversorgung dient, ein Mikroprozessor 40 zur Auswertung der Werte der Temperatursensorelemente 32 und deren Umwandlung in Sendesignale, die über eine Sendeantenne 42 gesendet werden. Es versteht sich, dass auch die Sende- und Empfangsantenne, die zu einem Bauelement zusammengefasst sein können, von dem Transponder entfernt und beispielsweise in die Seitenwand des Reifens eingenäht sein können.

Wie aus Fig. 2 ersichtlich, können in die Reifenschulter mehrere Temperatursensorelemente 32 eingebettet werden, die in Reihe geschaltet sind, so dass ihre Funktionstüchtigkeit mittels einer Durchgangsprüfung überprüft werden kann.

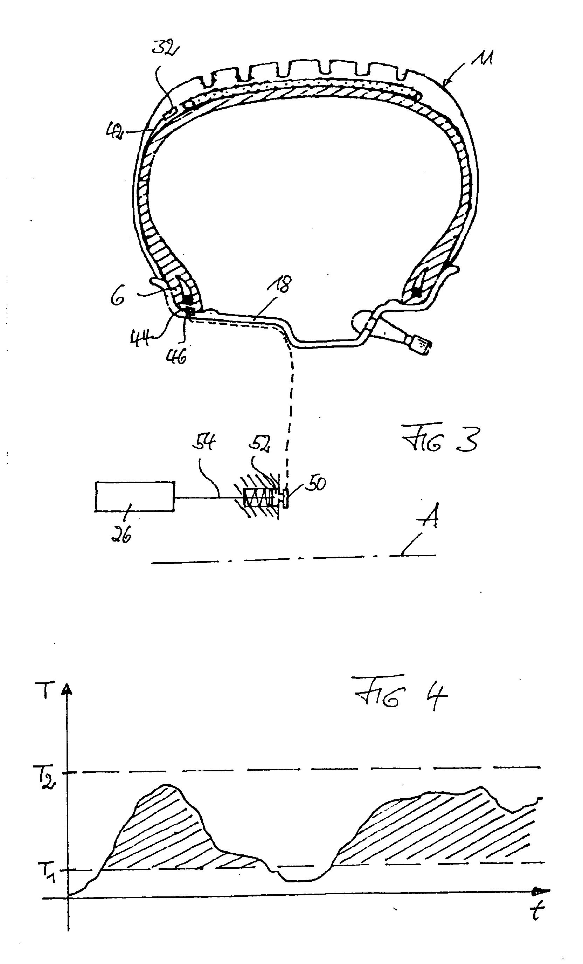

Fig. 3 zeigt eine ohne Transponder arbeitende, in den Reifen integrierte Meßanordnung.

Gemäß Fig. 3 ist in den Reifen im Bereich von dessen Schulter ein Temperatursensorelement 32 integriert, das über in die Gummischicht 11 integrierte Drähte 42 mit im Bereich des Wulstes 6 freiliegenden Kontakten 44 verbunden ist. Die reifenfesten Kontakte 44 sind in elektrischer Verbindung mit Kontakten 46, die an der Felge 18 vorgesehen sind. Die felgenfesten Kontakte 46 sind über an der Felge beziehungsweise der nicht dargestellten Radschüssel vorgesehene Leiterbahnen mit radfesten Kontaktringen 50 verbunden, die mit fahrzeugfesten Schleifkontakten 52 elektrisch verbunden sind, von denen Leitungen 54 an eine Auswerteeinrichtung 26 führen. Die strichpunktierte Linie A bezeichnet die Drehachse des Rades.

Die über mechanische Kontakte arbeitende Anordnung gemäß Fig. 3 kann in vielfältiger Weise abgeändert werden. Längs des Umfangs des Reifens können mehrere Temperatursensorelemente 32 angeordnet werden. Die Temperatursensorelemente 32 können kapazitiv oder in anderer zur Temperaturmessung an sich bekannter Weise arbeiten. Die Datenübertragung zwischen dem Fahrzeugrad und dem Fahrzeug muß nicht über Schleifringe erfolgen, sondern kann induktiv, optisch oder sonstwie erfolgen.

Die erfindungsgemäße Temperaturmessung, die eine kurzzeitige Überwachung des Reifenzustandes zulässt, indem bei Überschreiten einer vorbestimmten Temperatur ein Warnsignal erzeugt wird, und die eine Langfristüberwachung des Reifens ermöglicht, indem die Temperaturbelastung des Reifens in ihrem Zeitverlauf erfasst wird und beispielsweise ein Zeitintegral der Temperatur ermittelt wird, das ein Maß für die Reifenschädigung ist, kann in einem Fahrzeug selbst eingesetzt werden, oder lediglich auf einem Reifenprüfstand eingesetzt werden, wo beispielsweise die Temperatur der Reifenschulter abhängig von verschiedenen Luftdrücken und Belastungen des Reifens ermittelt wird, um die Qualität des Reifens zu überwachen. Bei Einsatz im Fahrzeug selbst ist die Auswerteeinrichtung vorteilhafterweise in einen Bordrechner integriert und erzeugt beispielsweise ein Warnsignal bei zu hoher Reifenschultertemperatur als Anzeige zu geringen Luftdrucks und/oder ein anderes Warnsignal, wenn der Reifen beispielsweise während seiner Betriebsdauer unzulässig lang mit niedrigem Luftdruck gefahren wurde und dadurch geschädigt sein kann.

Fig. 4 zeigt einen beispielhaften Temperaturverlauf, wie er von einem Temperatursensorelement 32 erfaßt wird. Die Abszisse gibt die Zeit t und die Ordinate gibt die Temperatur T an. Während Stillstandszeiten des Fahrzeugs sinkt die Temperatur im wesentlichen auf die Umgebungstemperatur ab. Beim Fahren erwärmt sich die Reifenschulter und die Temperatur übersteigt einen unteren Schwellwert T ₁. Je nach Luftdruck im Reifen, Fahrzeuggeschwindigkeit, Fahrzeugbelastung, Streckenprofil usw. ergibt sich ein Temperaturverlauf, der durch die Kurve dargestellt ist. Eine in der Ausweiteeinrichtung 26 enthaltene Auswerteschaltung integriert die dargestellte Temperaturkurve über die Zeit immer dann, wenn der vorbestimmte Temperaturschwellwert T₁ überschritten wird, der so gewählt ist, daß seine dauerhafte Überschreitung zu einer Schädigung des Reifens führen kann. Typischerweise liegt der Temperaturschwellwert T₁ je nach Reifen zwischen 60 und 80 Grad. Da die Schädigung des Reifens insgesamt mit steigender Temperatur überproportional zunimmt, kann in dem Rechner zunächst eine Funktion f(T), beispielsweise f(T)= aT²+ bT gebildet werden, wobei a und b Reifen-spezifische Konstanten sind, und diese Funktion f(T) wird dann integriert. In dem Temperaturverlauf bildet sich die "Schädigungsgeschichte" des Reifens ab, d.h. jede über dem Temperaturschwellwert T₁ liegende Temperatur trägt mit ihrer zugehörigen Zeitdauer zu der Reifenschädigung bei. Wenn das Integral der Kurve einen reifenabhängigen, vorbestimmten Wert überschreitet, zeigt dies an, daß der Reifen potentiell derart geschädigt ist, daß er ausgewechselt werden muß. Entsprechend erscheint an einem nicht dargestellten Ausgang der Auswerteeinrichtung 26 ein entsprechendes Ausgangssignal. Es versteht sich, daß die Kurve f(T), die die augenblickliche Reifenschädigung abhängig von der Temperatur angibt, empirisch ermittelt werden kann und anders als die beispielhaft Angegebene lauten kann.

In Fig. 4 ist mit T₂ ein oberer Temperaturschwellwert angedeutet, wobei ein unmittelbar ein Reifendefektsignal erzeugt wird, wenn dieser höhere Temperaturschwellwert T₂ während einer vorbestimmten kurzen Zeitdauer überschritten wird. Der Temperaturschwellwert T₂ ist derart gewählt, daß seine Überschreitung zu einer augenblicklichen Schädigung des Reifens, beispielsweise Karkassen- und/oder Gürtelablösung, führt. Eine Warnung betreffend zu niedrigen Luftdruck kann zwischen den Werten T₁ und T₂ ausgelöst werden.

Das vorbeschriebene Verfahren und das vorbeschriebene System können in vielfältiger Weise abgeändert werden. Beispielsweise kann einem Eingang der Auswerteeinrichtung 26 ein Signal zugeführt werden, das anzeigt, daß sich das Fahrzeug in Fahrt befindet, wobei die Auswerteeinrichtung das Ausgangssignal des bzw. der Temperatursensoren nur auswertet, wenn sich das Fahrzeug in Fahrt befindet. Es versteht sich, daß der jeweilige Integralwert in einem nicht flüchtigen Speicher gespeichert wird, so daß er nach Abschalten der Zündung erhalten bleibt und bei erneuter Auswertung weiter aufintegriert wird. Die Funktion f(T), die integriert wird, kann, ebenso wie die Temperaturschwellwerte, auf einem Prüfstand ermittelt werden.

In einer abgeänderten Ausführungsform kann die Berechnung des Integrals unmittelbar auf einen in dem Reifen integrierten IC-Baustein berechnet werden. Der errechnete Integralwert sowie das etwaige Überschreiten der kritischen Temperatur T₂ können beispielsweise in einer Werkstatt ausgewiesen werden, so daß dort erkannt wird, ob der Reifen geschädigt ist. Es versteht sich weiter, daß die gesamte in Fig. 4 dargestellte Kurve digital gespeichert werden kann und dann für eine Auswertung zur Verfügung steht.

Für den Fall, daß die Auswertung in einem Fahrzeugrechner erfolgt und eine jeweilige Schädigung dort gespeichert wird, muß bei einem Reifenwechsel bzw. Radwechsel jeweils ein Reset vorgenommen werden, so daß jedem Reifen ein korrekter Anfangswert zugeordnet wird.

Wenn eine Erhöhung des Reifenfülldrucks auf einen höchstzulässigen Wert nicht zu einer Absenkung der sich im Betrieb einstellenden Temperatur führt, deutet dies auf eine Überlastung des Fahrzeugs oder einen sonstigen Fehler.

Der erfindungsgemäß in dem Reifen angebrachte Temperatursensor kann zusammen mit einer geeigneten Auswerteeinrichtung für zahlreiche weitere Funktionen verwendet werden, wie
- Einschaltung eines Lüfters, der einen zu heißen Reifen gezielt kühlt,
- Auslösen eines Motorstops bei unzulässig hoher Temperatur,
- Optimierung der Reifeneigenschaften durch temperatur- und fahrzustandsabhängige Steuerung des Reifenfülldrucks,
- Anzeige der Notwendigkeit eines Reifenwechsels (augenblicklich wegen einer Panne und langfristig wegen Verschleiß und Alterung),
- Speicherung von Reifenkennwerten, wie Solltemperaturen, Sollfülldrucke in Abhängigkeit von der Fahrzeugbelastung, der Fahrgeschwindigkeit usw.
Der letztgenannte Einsatzzweck, bei dem auf einem auslesbaren Speicher entsprechende Reifenkennwerte gespeichert sind, hat den großen Vorteil, dass durch Auslesen der gespeicherten Kennwerte entsprechende fahrzeugfeste Überwachungs- und Steuereinrichtungen unmittelbar auf den entsprechenden Reifen eingestellt werden.

In einer vereinfachten Ausführungsform des Reifens bzw. des an ihm angebrachten elektronischen Bausteins kann der Temperatursensor fehlen und nur eine reifenfeste, herstellerseitig programmierte Speichereinrichtung vorgesehen sein, die auslesbar ist und deren Speicherwerte, wie zulässige Höchstgeschwindigkeit, Reifenfülldrucke, Herstelldatum und ggfs. auch der Verschleißzustand in einem fahrzeugfesten Display oder auf einem Handy anzeigbar sind. Auch mit einer solchen Speichereinrichtung, die den Reifenfülldruck nicht, wie beschrieben, überwacht, werden große Vorteile gegenüber herkömmlichen Reifen erzielt.

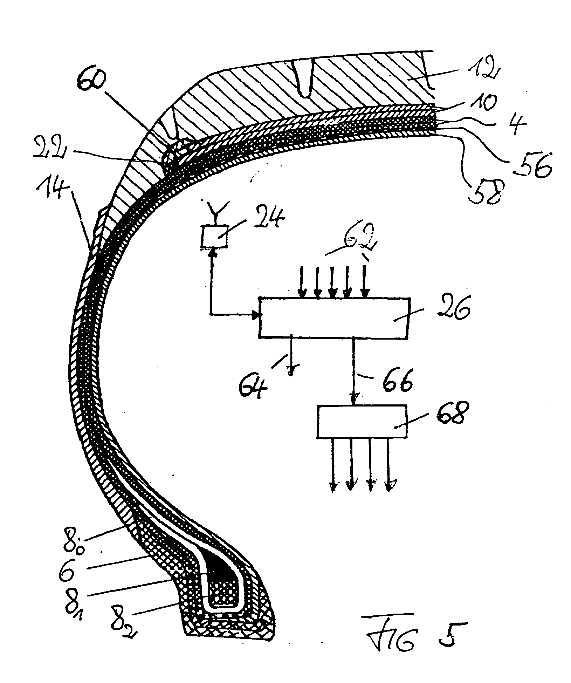

Fig. 5 zeigt ein weiteres Ausführungsbeispiel der Erfindung, wobei der Aufbau eines Reifens detaillierter als in Fig. 1 gezeigt ist. Der Laufstreifen 12 besteht vorteilhafterweise aus einer anderen Gummimischung als der Seitenstreifen 14. Der Gürtel 10 ist ebenso wie die Karkasse 4 zweilagig aufgebaut. Innerhalb der Karkasse findet sich eine Kappenlage 56, die auf der Außenseite einer Innenseele 58 angeordnet ist.

Am radial inneren Endbereich des Reifens geht der Seitenstreifen 14 in den Wulst über, der den aus einer Kernfahne 8₀, einem Kernprofil 8₁ und dem eigentlichen Kern 8₂ bestehenden Kernbereich radial außen überdeckt.

Mit 60 ist der Bereich bezeichnet, innerhalb dessen der bzw. die Temperatursensorelemente 32 (Fig. 2) bzw. die Temperatursensoreinheit 22 vorteilhafterweise angeordnet ist. Dabei kann der Temperatursensor seitlich neben einer der Gürtelschichten angeordnet werden, beispielsweise vor dem Vulkanisieren mit der Karkasse vernäht werden, oder in dem Bereich zwischen den auslaufenden Gürtelschichten angebracht werden. Das Anbringen des bzw. der Temperatursensorelemente im Bereich 60 hat den Vorteil, dass die Temperatur des Reifens unmittelbar dort erfasst wird, wo sie wegen der Walkarbeit am höchsten wird und die Funktionstauglichkeit des Reifens gegebenenfalls beeinträchtigt. Es versteht sich, dass es auch möglich ist, den Temperatursensor nachträglich auf der Innenseite des Bereiches 60 an der Innenseele 58 anzubringen.

Bei der Ausführungsform gemäß Fig. 5 ist die Sende-/Empfangseinrichtung, die die Temperatursignale empfängt, mit einer Auswerteeinrichtung 26 verbunden, die weitere Eingänge 62 aufweist, die beispielsweise der Fahrzeuggeschwindigkeit entsprechende Signale, der Fahrzeugbeladung entsprechende Signale, usw., empfangen. In der Auswerteeinrichtung 26 ist ein Kennfeld gespeichert, das die optimale Reifentemperatur abhängig von der Fahrzeuggeschwindigkeit, der Fahrzeugbeladung und der Dauer, während der die jeweilige Geschwindigkeit gefahren wird, sowie weiteren, die Reifentemperatur beeinflussenden Parametern, wie die Außentemperatur, Nässe der Straße, usw., abgelegt. Die Auswerteeinrichtung 26 weist zwei Ausgänge 64 und 66 auf, wobei am Ausgang 64 ein Warnsignal erscheint, wenn die Reifentemperatur von der im Kennfeld gespeicherten Temperatur über ein vorbestimmtes Maß abweicht. Am Ausgang 66 erscheint ein Steuersignal für eine Reifenluftdrucksteuereinrichtung 68, die eine in ihrem Aufbau an sich bekannte Vorrichtung steuert, mittels der der Reifeninnendruck durch Zuführen und Abführen von Luft veränderbar ist. Solche während der Fahrt betätigbaren Reifenluftdruckveränderungsvorrichtungen enthalten eine fahrzeugfeste Luftpumpe, die über zwischen Felge und Radträger vorgesehene Drehdurchführungen mit dem Innenraum der Reifen verbunden ist, wobei in der jeweiligen Verbindungsleitung ein elektrisch ansteuerbares Ventil angeordnet ist. Bei über einem Sollwert liegender Temperatur wird der Luftdruck erhöht. Bei unter einem Sollwert liegender Temperatur wird der Luftdruck vermindert. Auf diese Weise ist sichergestellt, dass das Fahrzeug jeweils mit dem Luftdruck betrieben wird, bei dem der Reifen seine optimalen Eigenschaften entfaltet. Es versteht sich, dass das System der Fig. 5 insgesamt vierkanalig ausgebildet ist, d.h., der Luftdruck jedes Reifens über die Überwachung der Reifentemperatur gesteuert wird. Weiter versteht sich, dass bei der Anordnung gemäß Fig. 5 die Ausführungsformen der Temperaturüberwachungsvorrichtung gemäß Fig. 1, 2 oder 3 verwendet werden können. Die vorteilhafteste Stelle zum Anbringen des Temperatursensors ist der Reifengummi im Bereich der Reifenschulter nahe der Karkasse und/oder dem Gürtel. der Temperatursensor oder insbesondere ein Datenspeicher mit Reifenkennwerten kann jedoch auch an der Innenseite des Reifens im Bereich der Schulter oder der Lauffläche durch Kleben oder Vulkanisieren angebracht werden.

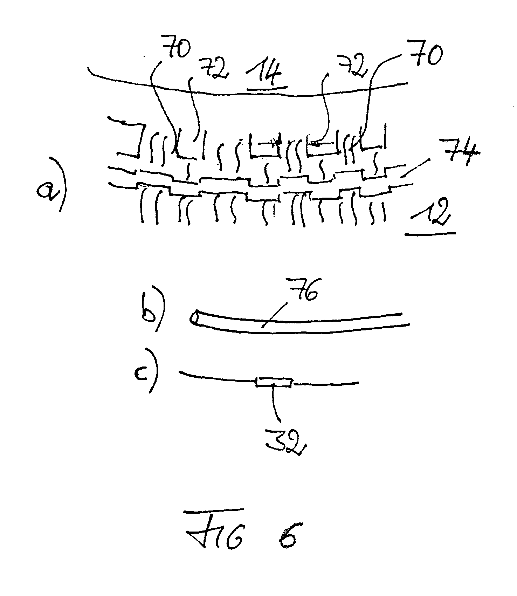

Anhand der Fig. 6 wird im Folgenden ein Verfahren zum nachträglichen Einbringen eines Temperatursensorelements 32 in einen Reifen erläutert; das nicht Umfang der Erfindung ist.

Fig. 6 a) stellt eine perspektivische Teilansicht auf eine Reifenschulter dar. Im Bereich des Übergangs zwischen dem Seitenstreifen 14 und dem Laufstreifen 12 ist der Laufstreifen 12 mit Profilerhöhungen 70 und zwischen diesen in Umfangsrichtung des Reifens beabstandeten Profilvertiefungen 72 ausgebildet. Zur Mitte des Reifens hin ist eine in Umfangsrichtung verlaufende Rille 74 ausgebildet, an die sich weitere Laufbereiche und Rillen anschließen. Die gekrümmten Linien stellen Einschnitte in den Laufstreifen dar, die dessen Haftvermögen verbessern.

Zum Einbringen eines Temperatursensorelements 32 (Fig. 6 c)) wird eine Profilerhöhung 70 zunächst von beiden Seiten aus in Richtung der Pfeile derart angebohrt, dass sich die Bohrungen im Inneren des Gummis am Gürtel bzw. der Karkasse treffen. Von einer Seite aus wird dann ein vorteilhafterweise etwas biegsames Röhrchen (Fig. 6 b)) durch die einen Kanal bildenden Bohrungen hindurchgeschoben, wobei das vordere Ende des Röhrchens ggfs. die Verbindung zwischen beiden Bohrungen durchsticht. Anschließend wird in das Röhrchen 76 das Temperatursensorelement 32 eingeschoben und mittels eines seiner Anschlussdrähte in der erwünschten tiefsten Position des Kanals bzw. an der Verbindungsstelle der Bohrungen gehalten, während das Röhrchen 76 herausgezogen wird. Das Temperatursensorelement wird vorteilhafterweise bereits vor seinem Einschieben mit einem Vulkanisiermittel oder einem Kleber bedeckt. Nach Entfernen des Röhrchens 76 wird in die Bohrungen zusätzlich Vulkanisiermittel oder ein Kleber eingebracht, sodass das Sensorelement 32 dicht und sicher in dem Reifen aufgenommen ist. Die Anschlussdrähte werden durch Vernähen und/oder durch Versenken in vorher ausgebildeten Rillen an Anschlüsse herangeführt, die beispielsweise an der Felge vorhanden sind.

Vorteilhaft ist, wenn der Kanal bzw. die Bohrungen in Umfangsrichtung des Reifens verlaufen, weil das Sensorelement und dessen Anschlussdrähte dann bei einer Verformung des Reifens im Bereich von dessen Schulter nur geringen eigenen Verformungen ausgesetzt sind.

Das geschilderte Verfahren, das sich beispielsweise zur Ausrüstung von Reifen für Prüfstands- oder Straßenversuche besonders gut eignet, kann in vielfältiger Weise abgeändert werden. Beispielsweise kann das Sensorelement ein Transponder ohne Verbindungsleitungen sein. Zum Einschieben in das Röhrchen 76 und Halten dient dann ein flexibles Stäbchen. In manchen Fällen genügt es, nur eine Bohrung anzubringen, die, wiederum vorteilhafterweise in Umfangsrichtung des Reifens, von einer Oberflächenstelle zu einer tiefen Stelle in der Nähe der Karkasse führt.

Von großer Wichtigkeit für einwandfreie Funktion der Temperatursensoren sind die verwendeten Leitungen, mit denen die in den Reifen eingebetteten Temperatursensoren, Speicherelemente oder sonstigen elektronischen Bauelemente an eine von ihnen entfernte Antenne, einen Schleifring oder eine sonstige Kontaktstelle angeschlossen sind und zwar sowohl im Falle einer werksseitigen Ausrüstung des Reifens mit einer Temperaturmesseinrichtung, wie z. B. gemäß Fig. 2 und 3, oder bei einer nachträglichen Ausrüstung gemäß Fig. 5. Beispiele für Anschlussleitungen sind ein dünnes, flexibles Stahlseil, vorteilhafterweise aus Edelstahl, mit einer Querschnittsfläche von z.B. 0,3 mm², ein Carbon-Aramidfaden, wobei die Carbonfasern zur Stromleitung und die Aramidfasern zur Sicherstellung der erforderlichen mechanischen Wechselfestigkeit dienen, oder andere Kunststofffasern bzw. -fäden mit elektrischer Leitfähigkeit. Die Verbindung der Anschlussleitungen mit dem Temperatursensor oder sonstigen elektronischen Elementen kann in an sich bekannter Weise, beispielsweise durch Crimpen, Löten usw., erfolgen.

### Bezugszeichenliste

| | | | |
|---|---|---|---|
| 4 | Karkasse | 42 | Sendeantenne |
| 6 | Wulst | 44 | Kontakt |
| 8 | Kern | 46 | Kontakt |
| 10 | Gürtel | 50 | Kontaktring |
| 11 | Gummischicht | 52 | Schleifkontakt |
| 12 | Laufstreifen | 54 | Leitung |
| 14 | Seitenstreifen | 56 | Kappenlage |
| 16 | Schulter | 58 | Innenseele |
| 18 | Felge | 60 | Bereich |
| 20 | Ventil | 62 | Eingang |
| 22 | Temperatursensoreinheit | 64 | Ausgang |
| 24 | Sende-/Empfangseinrichtung | 66 | Ausgang |
| 26 | Auswerteeinrichtung | 68 | Reifenluftdrucksteuereinrichtung |
| 30 | Temperatursensoreinheit | 70 | Profilerhebung |
| 32 | Temperatursensorelemente | 72 | Profilvertiefung |
| 34 | Transponder | 74 | Rille |
| 36 | Draht | 76 | Röhrchen |
| 38 | Empfangsantenne | | |
| 40 | Mikroprozessor | | |

## Patentansprüche

1. Verfahren zum Überwachen des Betriebs eines Fahrzeugreifens, wobei ein Ausgangssignal eines in den Fahrzeugreifen eingebetteten Temperatursensors an eine Auswerteeinrichtung (26) übertragen wird, **dadurch gekennzeichnet, dass** der Temperatursensor (22, 32) in den Übergangsbereich von der Seitenwand (14) des Reifens zur Lauffläche (4, 10, 12) eingebettet wird und das Ausgangssignal des Temperatursensors (22, 32) oder eine von dem Ausgangssignal abhängige Funktion in der Auswerteeinrichtung (26) integriert wird, der Wert des Integrals gespeichert wird und ein Verschleißsignal angezeigt wird, wenn der Wert des Integrals einen vorbestimmten Schwellwert übersteigt.

2. Verfahren nach Anspruch 1, wobei das Ausgangssignal oder eine von dem Ausgangssignal abhängige Temperatur nur integriert wird, wenn die vom Temperatursensor (22, 32) erfasste Temperatur über einem Temperaturschwellwert liegt.

3. Verfahren nach Anspruch 1 oder 2, wobei das Ausgangssignal des Temperatursensors (22, 32) in der Auswerteeinrichtung (26) ausgewertet wird und ein Reifenfülldruck erhöht wird, wenn die Reifentemperatur bei Vorliegen vorbestimmter Fahrbedingungen einen vorbestimmten Wert überschreitet.

4. System zum Überwachen des Betriebs eines Fahrzeugreifens, enthaltend einen Fahrzeugreifen mit wenigstens einem in den Fahrzeugreifen eingebetteten Temperatursensor (22, 32) und eine Übertragungseinrichtung (24, 34, 44, 46, 50, 52) zum Übertragen des Ausgangssignals des Temperatursensors (22, 32) an eine Auswerteeinrichtung (26), **dadurch gekennzeichnet, dass** der Temperatursensor (22, 32) in den Übergangsbereich von der Seitenwand (14) des Fahrzeugreifens zur Lauffläche (4, 10, 12) eingebettet ist und die Auswerteeinrichtung (26) das Ausgangssignal des Temperatursensors (26) oder eine von dem Ausgangssignal abhängige Größe integriert und ein Warnsignal erzeugt, wenn der Wert des Integrals einen vorbestimmten Schwellwert übersteigt.

5. Fahrzeugreifen, enthaltend wenigstens einen in den Reifen eingebetteten elektrisch oder elektronisch auslesbaren Temperatursensor (22, 32), **dadurch gekennzeichnet, dass** der Temperatursensor (22, 32) in den Übergangsbereich von der Seitenwand (14) des Reifens zur Lauffläche (4, 10, 12) eingebettet ist und mit einem in den Reifen eingebetteten elektrisch oder elektronisch auslesbaren Speicherbaustein (22, 34) verbunden ist, in dem ein aus einem Integral des Ausgangssignals des Temperatursensors gebildeter Schädigungswert gespeichert ist.

6. Fahrzeugreifen nach Anspruch 5, wobei in dem Speicherbaustein (22, 34) reifenspezifische Daten gespeichert sind.

7. Fahrzeugreifen nach Anspruch 5 oder 6, wobei ein mit dem Temperatursensor (32) verbundener Transponder (34) in den Reifen an einer Stelle nahe dem Reifenwulst (6) eingebettet ist.

8. Fahrzeugreifen nach Anspruch 5, wobei der Temperatursensor (32) über in den Reifen eingebettete elektrische Leiter (42) mit Kontakten (44) verbunden ist, die zur Berührung mit an einer Felge (18) vorgesehenen Kontakten (46) freiliegen.

## Claims

1. Method for monitoring the operation of a vehicle tire, wherein an output signal of a temperature sensor embedded in the vehicle tire is transmitted to an evaluation unit (26), **characterised in that** the temperature sensor (22, 32) is embedded in the transition area from the side wall (14) of the tire to the running surface (4, 10, 12) and the output signal of the temperature sensor (22, 32) or a function dependent upon the output signal is integrated in the evaluation unit (26), the value of the integral is stored and a wear signal is indicated when the value of the integral exceeds a predetermined threshold value.

2. Method according to claim 1, wherein the output signal or a temperature dependent upon the output signal is integrated only when the temperature detected by the temperature sensor (22, 32) is above a temperature threshold value.

3. Method according to claim 1 or 2, wherein the output signal of the temperature sensor (22, 32) is evaluated in the evaluation unit (26) and a tire inflation pressure is increased when the tire temperature exceeds a predetermined value during the existence of predetermined driving conditions.

4. System for monitoring the operation of a vehicle tire, comprising a vehicle tire having at least one temperature sensor (22, 32) embedded in the vehicle tire and a transmission device (24, 34, 44, 46, 50, 52) for transmitting the output signal of the temperature sensor (22, 32) to an evaluation device (26), **characterised in that** the temperature sensor (22, 32) is embedded in the transition area from the side wall (14) of the tire to the running surface (4, 10, 12) and the evaluation unit (26) integrates the output signal of the temperature sensor (26) or a quantity dependent upon the output signal and a warning signal is generated when the value of the integral exceeds a predetermined threshold value.

5. Vehicle tire comprising at least one electrically- or electronically-readable temperature sensor (22, 32) embedded in the tire, **characterised in that** the temperature sensor (22, 32) is embedded in the transition area from the side wall (14) of the tire to the running surface (4, 10, 12) and is connected with an electrically- or electronically-readable memory module (22, 34) embedded in the tire, in which memory module a deterioration value formed from an integral of the output signal of the temperature sensor is stored.

6. Vehicle tire according to claim 5, wherein tire-specific data are stored in the memory module (22, 34).

7. Vehicle tire according to claim 5 or 6, wherein a transponder (34) connected with the temperature sensor (32) is embedded in the tire at a location close to the tire bead (6).

8. Vehicle tire according to claim 5, wherein the temperature sensor (32) is connected with contacts (44) via electrical wires (42) embedded in the tire, which contacts (44) are exposed for contact with contacts (46) provided on a rim (18).

## Revendications

1. Procédé de surveillance du fonctionnement d'un pneu de véhicule, dans lequel un signal initial d'un capteur de température noyé dans le pneu du véhicule est transmis à un dispositif d'analyse (26), **caractérisé en ce que** le capteur de température (22, 32) est noyé dans la zone de transition entre la paroi latérale (14) du pneu et la surface de roulement (4, 10, 12) et le signal initial du capteur de température (22, 32) ou une fonction dépendant du signal initial est intégrée au dispositif d'analyse (26), la valeur de l'intégrale est enregistrée et un signal d'usure est affiché lorsque la valeur de l'intégrale dépasse une valeur seuil prédéterminée.

2. Procédé selon la revendication 1, dans lequel le signal initial ou une température dépendant du signal initial n'est intégré(e) que si la température détectée par le capteur de température (22, 32) se trouve au-dessus d'une valeur seuil de température.

3. Procédé selon la revendication 1 ou 2, dans lequel le signal initial du capteur de température (22, 32) est analysé dans le dispositif d'analyse (26) et une pression de gonflage du pneu est augmentée si la température du pneu dépasse une valeur prédéterminée dans des conditions de conduite prédéterminées.

4. Système de surveillance du fonctionnement d'un pneu de véhicule, comprenant un pneu de véhicule avec au moins un capteur de température (22, 32) noyé dans le pneu de véhicule et un dispositif de transmission (24, 34, 44, 46, 50, 52) pour transmettre le signal initial du capteur de température (22, 32) à un dispositif d'analyse (26), **caractérisé en ce que** le capteur de température (22, 32) est noyé dans la zone de transition entre la paroi latérale (14) du pneu de véhicule et la surface de roulement (4, 10, 12) et le dispositif d'analyse (26) intègre le signal initial du capteur de température (26) ou une mesure dépendant du signal initial et génère un signal d'avertissement lorsque la valeur de l'intégrale dépasse une valeur seuil prédéterminée.

5. Pneu de véhicule contenant au moins un capteur de température (22, 32) noyé dans le pneu, lisible en mode électrique ou électronique, **caractérisé en ce que** le capteur de température (22, 32) est inséré dans la zone de transition entre la paroi latérale (14) du pneu et la surface de roulement (4, 10, 12) et est connecté à un module de mémoire (22, 34) noyé dans le pneu et lisible en mode électrique ou électronique, dans lequel on enregistre une valeur d'endommagement formée à partir d'une intégrale du signal initial du capteur de température.

6. Pneu de véhicule selon la revendication 5, dans lequel des données spécifiques au pneu sont enregistrées dans le module de mémoire (22, 34).

7. Pneu de véhicule selon la revendication 5 ou 6, dans lequel un répondeur (34) connecté au capteur de température (32) est noyé dans le pneu à un endroit proche du talon de pneu (6).

8. Pneu de véhicule selon la revendication 5, dans lequel le capteur de température (32) est connecté par des conducteurs électriques (42) noyés dans le pneu à des contacts (44) qui sont dégagés de contacts (46) prévus sur une jante (18).
